# EUROPÄISCHE PATENTSCHRIFT

(11) **EP 1 745 993 B1**
(45) Veröffentlichungstag und Bekanntmachung des Hinweises auf die Patenterteilung: **01.04.2009**
(21) Anmeldenummer: 06015202.2
(22) Anmeldetag: 21.07.2006
(51) Int. Cl.: B60R 21/34

(54) **Vorrichtung zum Aufstellen der Fronthaube eines Kraftfahrzeuges**
Lifting apparatus for a front hood of a motor vehicle
Dispositif de levage pour capot moteur d'un véhicule automobile

(30) Priorität: 23.07.2005 DE 102005034558
(43) Veröffentlichungstag der Anmeldung: 24.01.2007
(73) Patentinhaber: ISE Automotive GmbH, 51702 Bergneustadt (DE)
(72) Erfinder: Schulte, Michael, 57462 Olpe (DE)
(74) Vertreter: Fuchs

(56) Entgegenhaltungen:
- DE-A1- 10 247 801
- DE-A1- 10 301 401
- DE-A1- 10 356 310
- DE-A1-6102004 004 98

## Beschreibung

Die Erfindung bezieht sich auf eine Vorrichtung zum Schutz von Personen bei einem Frontalaufprall auf ein Kraftfahrzeug durch aktives Aufstellen dessen Fronthaube im Haubenscharnierbereich mittels eines sensorgesteuert aktivierbaren Aufstellelementes, welches einen pyrotechnischen Gasgenerator als Energiespeicher zum Aufstellen besitzt.

Jährlich ereignen sich zahlreiche Unfälle, bei denen Fußgänger, seien es Kinder oder Erwachsene, bzw. Zweiradfahrer oder Skater, von einem Kraftfahrzeug angefahren, auf dessen Front- oder Motorhaube sowie gegen die Windschutzscheibe geschleudert werden, und dabei zumindest schwere Verletzungen erfahren. Dabei ist insbesondere der Kopf sowie der Oberkörper eines erwachsenen Fußgängers bzw. Zweirad-Fahrers gefährdet, da dieser bei einem Zusammenprall mit einem Kraftfahrzeug - wie Crash-Versuche und auch die Erfahrungen gezeigt haben -, etwa im hinteren, relativ hartem Bereich an der Fronthaube am Übergang zur Windschutzscheibe aufschlägt und dabei erheblich verletzt wird.

Aufgrund von entsprechenden Forderungen arbeitet die Fahrzeugindustrie intensiv an dem Problem, den Personenschutz insoweit zu verbessern.

Es ist eine Reihe von Möglichkeiten zur Lösung dieses Problems bekannt geworden. Ein Lösungsprinzip besteht darin, den vorgenannten harten Übergangsbereich zur Windschutzscheibe zu entschärfen, d. h. nachgiebiger zu gestalten, z.B. durch einen sensorgesteuert aufblasbaren Luftsack oder gemäß DE 28 14 107 A in Verbindung mit der DE 28 41 315 durch eine mittels eines Aufprall-Sensors betätigte Vorrichtung zur Verstellung der Fronthaube aus einer Ruheposition in eine demgegenüber angehobene, nachgiebige Aufprallposition, d. h. eine sogenannte "aktive Fronthaube". Dadurch, dass die Fronthaube bei der von dem Aufprall-Sensor erfassten Kollision mit einem Fußgänger in eine gegenüber ihrer Ruhe - d. h. Normalfallstellung angehobene Aufprallstellung nachgiebig verstellt wird, wird ein beim Brust- oder Kopfaufprall des Fußgängers im Sinne eines günstigeren Energieabbaues zur Wirkung kommender Deformationsweg der Fahrzeugkarosserie geschaffen, der für verringerte Kopf- und Brustverzögerungen und damit für geringere Verletzungsrisiken sorgt.

Die DE 197 12 961 A1 zeigt ebenfalls einen Aufprallschutz nach dem Prinzip der aktiven Fronthaube, deren windschutzscheibenseitige Scharnieranordnung über einen schwenkbar oder verschiebbar gelagerten Scharnierträger so an der Karosserie des Vorderwagens befestigt ist, dass im Falle einer Kollision des Fahrzeuges mit einer Person die Fronthaube samt der Schamieranordnung mittels einer an dem Scharnierträger angreifenden energiespeichernder Einrichtung, z. B. einem Feder-Kraftspeicher, nach oben verschwenkt bzw. verschoben, d. h. angehoben werden kann.

Zum aktiven Aufstellen der Fronthaube dienen Aufstellelemente, auch Aktoren genannt, die typischerweise ein karosseriefest angebrachtes, gehäuseförmiges Unterteil und ein darin aufstellbar geführtes Hubelement in Verbindung mit einem Energiespeicher besitzen, der durch einen sensorgesteuerten Aktuator im Fall eines drohenden Unfalles auslösbar ist, und dabei das Hubelement mit der Fronthaube um einen vorgegebenen Arbeitshub aufstellt. Der vorveröffentlichte Stand der Technik und Gegenstände von zahlreichen, noch nicht veröffentlichten älteren Anmeldungen der Patentanmelderin, zeigen eine Reihe von Konstruktionen für diese Aufstellelemente, die typischerweise als Energiespeicher einen Federspeicher in Form einer vorspannbaren Schraubenfeder-Anordnung besitzen. Stellvertretend hierzu wird auf die DE 102 43 497 B4 verwiesen.

Diese Aufstellelemente haben sich in einschlägigen Tests voll bewährt. Sie benötigen jedoch funktionsbedingt eine mit hoher Sicherheit auslösbare Haltevorrichtung zum Niederhalten des durch die Schraubenfeder-Anordnung vorgespannten Hubelementes in der Grundstellung und eine zusätzliche Reversiereinrichtung zum Reversieren des ungewollt aufgestellten Hubelementes, da die starken Federkräfte des Federspeichers nicht ohne weiteres manuell überwunden werden können. Beide Maßnahmen bedingen einen gewissen Aufwand, der dem generellen Kostendruck in der Automobilindustrie ausgesetzt ist. Es besteht daher ein Bedürfnis, diesen Aufwand zu reduzieren.

Es ist aus der eingangs zitierten DE 28 41 315 A1 und der DE 103 43 106 A1 sowie der DE 101 08 882 A1 bekannt, als Energiespeicher kein Federpaket, sondern eine sensorgesteuert zündbare pyrotechnische Treibladung als Aktuator zum Aufstellen des Hubelementes vorzusehen. Dadurch ist es u.a. möglich, auf eine gesonderte Reversiereinrichtung zu verzichten, d.h. insoweit den Aufwand zu verringern, weil nach dem Abbau des freigesetzten Gasdruckes die Fronthaube ohne weiteres manuell zurückgesetzt werden kann.
Da die Treibladung die Treibgase explosionsartig freisetzt, wird das Hubelement sehr stark beschleunigt und schlägt mit relativ hoher Kraft an dem den Arbeitshub begrenzenden karosseriefesten Anschlag im Unterteil, dem Gehäuse des Aufstellelementes, an. Abgesehen von dem dabei zusätzlich entstehenden starken Knall werden die Komponenten des Aufstellelementes auch stark mechanisch beansprucht. Ferner kann es zu einem Rückschlag kommen, was die Funktionssicherheit des Aufstellelementes beeinträchtigt.

Es ist auch bekannt (DE 101 08 882 A1 a.a.O; WO 02/09 983 A2 und DE 102 49 272 A1) bei Aufstellelementen mit einem Federspeicher die Auslösung anstelle durch einen sogenannten Auslöse- oder Crashmagneten durch ein pyrotechnisches Auslöseglied zu bewirken.

Die DE 103 56 310 A1 zeigt schließlich ein Aufstellelement, dessen Hubelement in dem Gehäuse im Ruhezustand durch eine Haltevorrichtung fixiert ist, mit einem einzigen pyrotechnischen Treibsatz, d.h. einem Gasgenerator, der nach seiner sensorgesteuerten Auslösung zunächst die Haltevorrichtung auslöst und danach das Hubelement aufstellt.

Von einem derartigen Aufstellelement mit nur einem Gasgenerator als Auslöseglied und zugleich als Energiespeicher zum Aufstellen für das Hubelement, geht die Erfindung aus.

Ihr liegt die Aufgabe zugrunde, das eingangs bezeichnete Aufstellelement so auszubilden, daß ein harter Anschlag des Hubelementes beim Aufstellen vermieden wird und eine zusätzliche Abstützfunktion neben dem flüchtigen Gaspolster zum Abbau der Aufprallenergie bei einem Personenunfall integrierbar ist.

Die Lösung dieser Aufgabe gelingt mit einer Vorrichtung zum Schutz von Personen bei einem Frontalaufprall auf ein Kraftfahrzeug durch aktives Aufstellen dessen Fronthaube im Haubenscharnierbereich, bestehend aus einem Aufstellelement mit einem karosseriefesten Gehäuse und einem darin linear geführten, mit dem Haubenscharnier verbundenen Hubelement, das im Grundzustand durch eine auslösbare Haltevorrichtung in seiner Lage fixiert ist und sensorgesteuert um einen mittels eines karosseriefesten Anschlages vorgegebenen Hub unter Aufstellung der Fronthaube ausfahrbar ist, dadurch, dass zum Auslösen der Haltevorrichtung und zum alleinigen Aufstellen des Hubelementes ein gemeinsamer pyrotechnischer Gasgenerator vorgesehen ist, dass wobei dem Anschlag Dämpfungsmittel vorgeschaltet und so ausgebildet sind, dass das Hubelement bei seiner Aufstellung seine durch den Anschlag begrenzte Endlage abgebremst weich erreicht, und dass zur Abstützung des Hubelementes in seiner aufgestellten Position sowie zum Halten in dieser Position mindestens eine parallel geschaltete Stütz-Feder vorgesehen ist, die so ausgelegt ist, dass sie erst in der aufgestellten Stellung des Hubelementes mit diesem in Wirkkontakt tritt.

Durch das gedämpfte Erreichen der Endlage des Hubelementes wird ein relativ weicher Anschlag ohne Rückschlag und ohne mechanische Beeinträchtigung des Aufstellelementes erzielt. Durch die parallel geschaltete Abstützfunktion ist ein zusätzlicher, wirksamer Abbau der Aufprallenergie durch ein nachgebendes Absorberelement möglich.

Weiterbildung und Ausgestaltungen der Erfindung sind in den Unteransprüchen gekennzeichnet sowie ergeben sich aus der nachfolgenden Figurenbeschreibung.

Anhand von in den Zeichnungen dargestellten Ausführungsbeispielen wird die Erfindung näher erläutert.

Es zeigen:
- Fig. 1: in einer aufgebrochenen isometrischen Darstellung den prinzipiellen Aufbau des erfindungsgemäßen Aufstellelementes mit nur einem pyrotechnischen Treibsatz zum Auslösen und Aufstellen des Hubelementes und einer parallel geschalteten Feder-Abstützfunktion im Grundzustand,
- Fig. 2: das Aufstellelement nach Fig. 1 in einer Längsschnitt-Darstellung,
- Fig. 3: das Aufstellelement nach Fig. 1, jedoch im ausgelösten und aufgestellten Zustand des Hubelementes,
- Fig. 4: das Aufstellelement nach Fig. 3 in einer Längsschnitt-Darstellung,
- Fig. 5: eine isometrische Teil-Darstellung des Aufstellelementes nach Fig. 1 mit einer dritten Variante für ein gedämpftes Erreichen der Endlage des Hubelementes durch plastische Verformung einer Einlaufschräge, und
- Fig. 6: eine isometrische Teil-Darstellung des Aufstellelementes nach Fig. 1 mit einer zweiten Variante für ein gedämpftes Erreichen der Endlage des Hubelementes mittels abscherbarer Zähne.

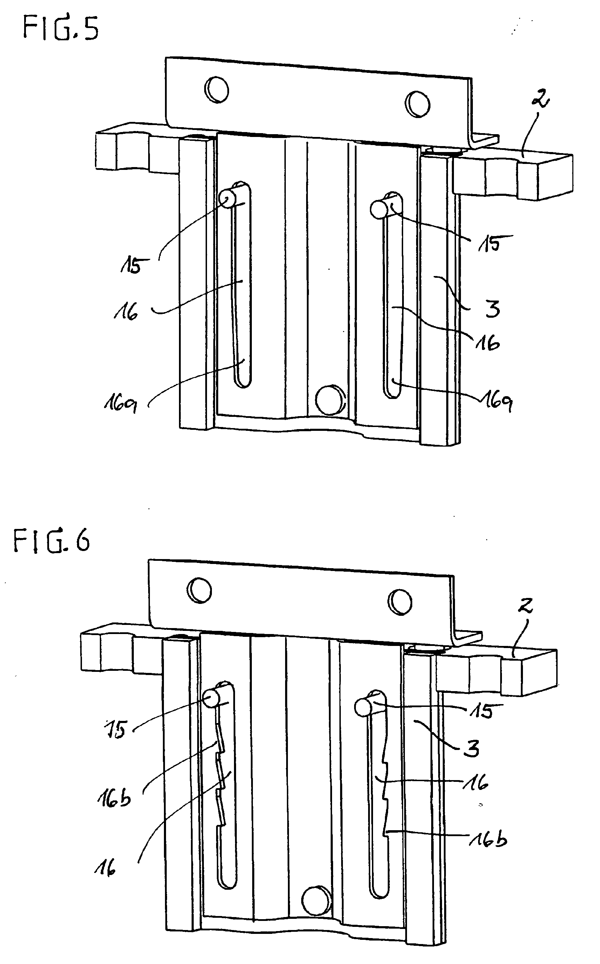

Die Zeichnungen zeigen ein Aufstellelement zum sensorgesteuerten Aufstellen der Fronthaube eines Personenkraftwagens im Haubenscharnierbereich bei einem drohenden Personenaufprall. Dieses Aufstellelement 1 besteht aus einem karosseriefest anbringbaren rechteckigen Unterteil, dem Gehäuse 2, und einem darin aufstellbar geführten, rechteckigen Hubelement 3, das innen hohl ausgebildet ist.
Das Hubelement 2 ist kopfseitig mit dem Haubenscharnier verbunden, sei es indirekt über einen Scharnierträger, wie in den Figuren 5 und 6 angedeutet, oder direkt mit dem karosserieseitigen Scharnierflügel, wobei der andere Scharnierflügel mit der Fronthaube verbunden ist. Zwei Anschläge 2 a an den Schmalseiten des Gehäuses 2 in Verbindung mit jeweils einem unteren Bund 3 a am Aufstellelement 3 begrenzen die Aufstellbewegung, d.h. definieren den Arbeitshub des Hubelementes.

Eine zylindrische Wandung 4 bildet eine mittige Druckkammer 5, die kopfseitig verschlossen ist und an der fußseitig ein pyrotechnischer Gasgenerator 6 angebracht ist, vorzugsweise auswechselbar, z.B. durch Verschrauben. Die Mittel zum sensorgesteuerten Zünden des Gasgenerators sind nicht dargestellt. Diese Komponenten sind dem einschlägigen Fachmann wohl bekannt, und brauchen daher auch nicht näher beschrieben zu werden.

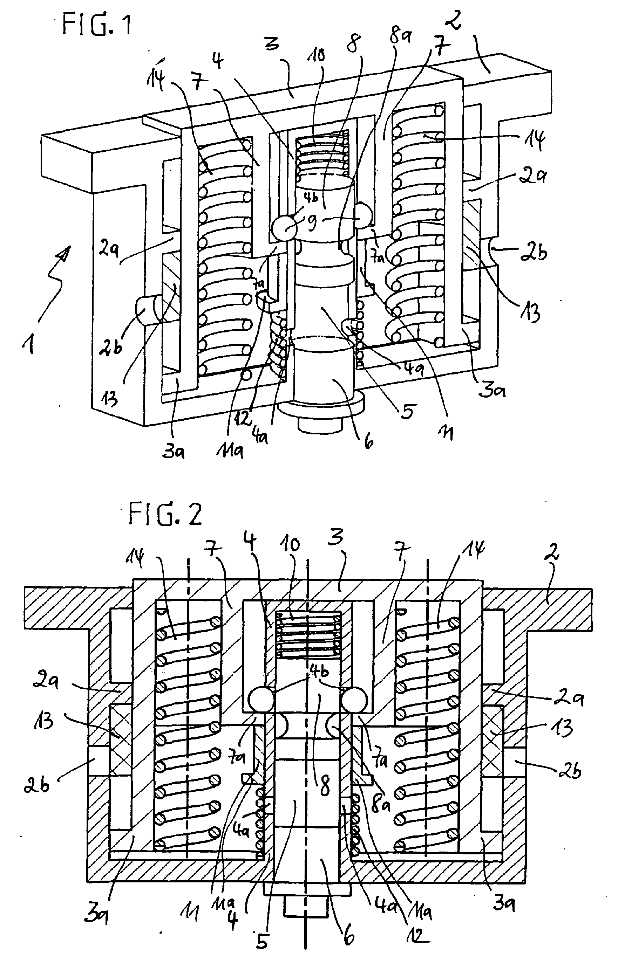

Die Wandung 4 besitzt im Raum oberhalb des Gasgenerators 6 Gasaustrittsöffnungen 4 a zum Einströmen der Treibgase in den Raum innerhalb des Hubelementes 3, um dieses im Crashfall aufzustellen, wobei beispielsweise zwei Öffnungen dargestellt sind. Es können auch mehr als zwei Öffnungen vorgesehen sein. Entsprechend sind im Gehäuse 2 Öffnungen 2 b zum Abbau des Gasdruckes vorgesehen. Das Hubelement 3 besitzt ferner zwei nach innen abgewinkelte Zwischenstege 7, deren abgewinkelte Schenkel 7 a, die Wandung 4 der Druckkammer 5 außen mit leichtem Spiel umfassend, darauf geführt sind.
Das Hubelement 3 ist im Grundzustand (Figuren 1 und 2) durch eine auslösbare Haltevorrichtung in seiner Lage fixiert. Im dargestellten Ausführungsbeispiel wird die auslösbare Haltevorrichtung durch ein Kugelschloss in Verbindung mit einem Steuerkolben gebildet. Der Steuerkolben 8 ist im Innern der Druckkammer 5 oberhalb der Gasaustrittsöffnungen 4 a geführt aufgenommen und besitzt eine umlaufende Ring-Nut 8 a mit einem nahezu halbkreisförmigen Querschnitt zum partiellen Aufnehmen von zwei Rastkugeln 9 im Auslösefall, die jeweils in einer kugelfangartigen Ausnehmung 4 b in der Wand 4 der Druckkammer aufgenommen sind. Im Grundzustand (Figuren 1 und 2) sind die Rastkugeln 9 des Kugelschlosses radial nach außen gespreizt und liegen oberhalb der abgewinkelten Schenkel 7 a der Zwischenstege 7 des Hubelementes an diesen an. Oberhalb des Steuerkolbens 8 ist eine Kolbenrückstellfeder 10 ausgebildet als Druckfeder, in der Druckkammer 5 untergebracht, die sich mit ihrer anderen Anlage am Kopfteil der Druckkammer abstützt.
Auf der zylindrischen Wandung 4 der Druckkammer 5 ist weiterhin eine Bundbuchse 11 gleitend geführt aufgenommen, der eine Druckfeder 12 zugeordnet ist, die sich unten am Gehäuseboden und oben am Bund 11 a der Bundbuchse abstützt.
Die Druckfeder 12 ist vorgespannt und drückt die Bundbuchse 11 von unten gegen die abgewinkelten Schenkel 7 a der Zwischenstege 7 des Hubelementes.
Im Raum unterhalb des Gehäuse-Anschlages 2 a ist jeweils ein deformierbarer Anschlagpuffer 13 aus einem entsprechenden, konventionellen stoßabsorbierenden elastomeren Material angebracht, der im Grundstand die Druckabbau-Öffnungen 2 b abdeckt. Ferner sind im Innern des Hubelementes 3 in entsprechenden Kammerabteilen zwei parallel geschaltete Stützfedern 14, vorzugsweise in Form von Spiraldruckfedern, angeordnet, die sich am Gehäuseboden und am Kopfteil des Hubelementes abstützen. Die Auslegung der Stützfedern ist so gewählt, dass sie letztlich das Eigengewicht der Fronthaube nach ihrer Anhebung kompensieren können, d.h. die aufgestellte Position der Fronthaube auch während bzw. nach Entweichen der aufstellenden Energie beibehalten können. Sie dient also nicht zur Unterstützung der Aufstellbewegungen, d.h. hat nicht die Funktion der Aufstelldruckfedem der bekannten Aufstellelemente mit einem Federspeicher. Sie hat vielmehr in gezielter Weise eine parallel geschaltete Abstützfunktion, um den Aufprall einer verunfallten Person auf der Fronthaube zusätzlich elastisch nachgebend zu dämpfen.

Die Wirkungsweise des erfindungsgemäßen Aufstellelementes ist wie folgt:

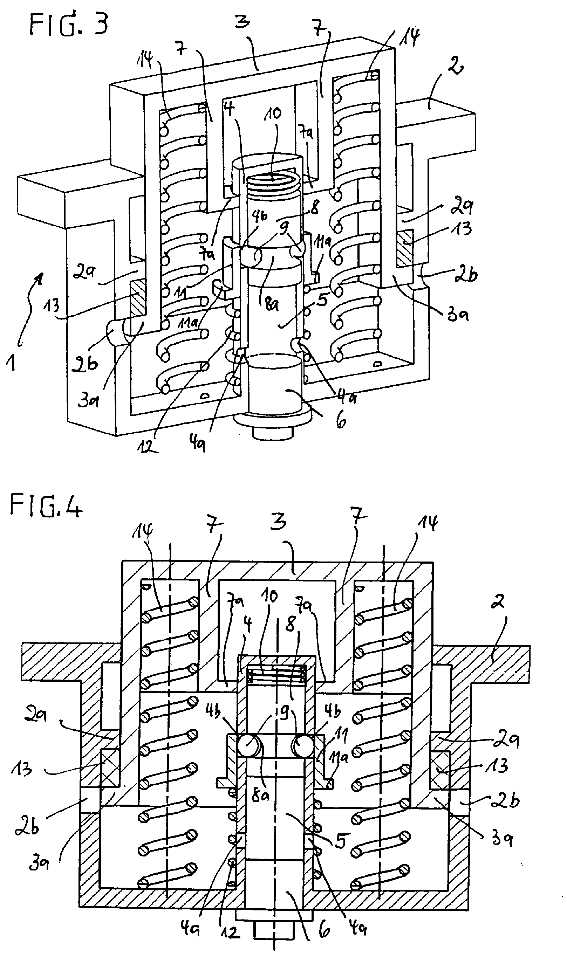

Nach Eingang des Steuersignals einer den drohenden Unfall erfassenden Sensorik wird der pyrotechnische Gasgenerator 6 gezündet, der innerhalb von wenigen Millisekunden einen Gasdruck von mehreren 100 bar erzeugt. Der Gasdruck trifft zunächst voll auf den Boden des Steuerkolbens 8 auf und verschiebt diesen nach oben, bis die Rastkugeln 9 in seiner umlaufenden Nut 8 a einrasten. Damit ist das Kugelschloss, d.h. die Haltevorrichtung ausgelöst. In der Zwischenzeit hat sich über die Gasaustrittsöffnungen 4 a bei abgedeckten Druckabbauöffnungen 2 b und über das Spiel zwischen den abgewinkelten Schenkeln 7 a und der zylindrischen Wandung 4 unterhalb des Kopfteiles des Hubelementes 2 ein entsprechender Gasdruck aufgebaut, der zum Ausfahren des Hubelementes 2 führt. Zum Ende der Auffahrbewegung des Hubelementes wird der Gasdruck durch die dann freigelegten Druckabbauöffnungen 2 b gezielt abgebaut. Der erzeugte Gasdruck ist daher bereits vor Erreichen der in den Figuren 3 und 4 dargestellten Endposition des Hubelementes vermindert. Da es für die Funktionssicherheit von hoher Bedeutung ist, dass die Aufstellbewegung sicher zum Ende hin definiert stark abgebremst wird, damit der Anschlagimpuls nicht zu einem Rückschlag führt, sieht die Erfindung den deformierbaren Anschlagpuffer 13 vor, der jeweils zwischen dem Gehäuseanschlag 2 a und dem unteren Bund 3 a des Hubelementes unter Dämpfung des Anschlages quasi "zusammengequetscht" wird.

Die parallel geschalteten Stütz-Federn 14 können, trägheitsbedingt, der durch den Gasdruck erzeugten Aufstellbewegung nicht so schnell folgen. Erst zum Ende der Aufstellbewegung werden die Stütz-Federn bis zum Kopfteil des Aufstellelementes expandiert sein und können dann die ihren durch die Erfindung zugedachte Funktion wahrnehmen. Durch manuelles Drücken auf die aufgestellte Fronthaube kann das Hubelement und damit auch die Fronthaube selbst gegen die relativ geringe Kraft der Stütz-Federn reversiert werden, bis die Haltevorrichtung mit dem Kugelschloß wieder gespannt ist und der Grundzustand nach den Figuren 1 und 2 wieder erreicht ist. Die schulterförmig abgewinkelten Schenkel 7 a drücken dabei nach einem bestimmten zurückgelegten Weg auf die Ringfläche der Bundbuchse 11 und bewegen diese gegen die Druckfeder 12 in Richtung Ausgangslage. Die Kugeln 9 werden, nachdem sie von den Schultern 7 a des Hubelementes überfahren wurden, freigegeben, und die Kolbenrückstellfeder 10 (Druckfeder), die sich oberhalb des Steuerkolbens befindet, sorgt über die Formgebung der Ringnut 8 a dafür, dass die Kugeln nach außen gedrückt werden.
Durch einen gewissen Überhub wird sichergestellt, dass die Endlage des Hubelementes 3 erreicht wird und die Kugeln sicher verrasten.
Das Hubelement ist jetzt wieder gegen das fahrzeugfeste Gehäuse gesichert.

Eine gesonderte Reversiereinrichtung wie bei Aufstellelementen mit Federspeichern ist dadurch nicht notwendig.

Es ist verständlich, dass das in den Zeichnungen dargestellte Aufstellelement als Ausführungsbeispiel zu sehen ist, das abänderbar ist. So muss nicht zwingend das Aufstellelement eine rechteckige Form haben. Es kann auch einen kreisrunden oder ovalen Querschnitt haben, wenn auch die rechteckige Form wegen der Unterbringung im Vorderwagen an beiden Seiten des Motorraumes bzw. der Scharnierausbildung besonders vorteilhaft ist.
Es können anstelle der beiden Stütz-Federn 14 auch drei oder nur eine Stütz-Feder vorgesehen sein.

Auch kann die Haltevorrichtung durch andere bekannte Konstruktionen als durch Kugelschloß mit Steuerkolben gebildet sein.

Die Anzahl der Gasaustritts-Öffnungen 4 a und der Druckabbau-Öffnungen 2 b bestimmt sich nach der geforderten Dynamik des Aufstellvorganges. Die Form der Öffnungen ist vorzugsweise kreisrund. Sie können aber auch schlitzartig ausgebildet sein.

Zusätzlich zu den Stütz-Federn kann das aufgestellte System weiterhin durch eine an sich bekannte nachgebende Verriegelungsstufe in dieser Position, z. B. durch die Kugelverrastung, gehalten werden. Diese Verriegelungsstufe ist so dimensioniert, dass sie mit einer geringen Kraft überwunden werden kann; der Aufprall einer Person reicht hierbei in jedem Fall aus.

Auch Varianten für ein gedämpftes Erreichen der Endlage des Hubelementes bzw. zum Energieabbau ist möglich.
In den Figuren 1 bis 4 ist ein deformierbarer Anschlagpuffer vorgesehen. Alternativ können, wie in den Figuren 5 und 6 zu sehen ist, Zähne abgeschert werden oder es kann eine plastische Verformung durch Einbringen einer Einlaufschräge vorgesehen werden, um den notwendigen Energieabbau bzw. das gedämpfte Erreichen der Endlage sicherzustellen.
Gemäß der Fig. 5 sind zwei Bolzen 15 an dem fahrzeugfesten Gehäuse 2 befestigt und bewegen sich in einer an dem Hubelement 3 befindlichen Kulisse 16, die eine Einlaufschräge 16 a aufweist, welche durch den Wirkeingriff mit dem Bolzen 15 unmittelbar vor Erreichen der Endlage auf die Ausfahrbewegung dämpfend wirkt.
In Fig. 6 ist eine weitere Variante für das gedämpfte Erreichen der Endlage vorgestellt, die eine Kulisse 16 mit eingearbeiteten Zähnen 16 b, aufweist, wobei sich die dämpfend wirkenden Zähne an wenigstens einer sich in Längsrichtung der Kulisse erstreckenden Seite befinden.

Die Zähne bzw. die Einbauschräge können dabei einstückiger Bestandteil des Hubelementes sein.
Besonders vorteilhaft ist ein Blech, welches sich an das Hubelement 3 anflanschen lässt. Der besondere Vorteil liegt hierbei darin, dass lediglich das mit den Zähnen oder der Einlaufschräge versehene Blech nach einer Auslösung ausgetauscht werden muß.

In der dargestellten Ausführungsform befindet sich der Bolzen 15 am fahrzeugfesten Gehäuse 2 und die Zähne bzw. die Einlaufschräge der Kulisse am Hubelement 3. Genauso gut könnte es jedoch auch umgekehrt sein, d.h. der Bolzen ist am Hubelement befestigt und die Kulisse 16 ist an dem fahrzeugfesten Gehäuse 2 eingearbeitet.

Alternativ zu der Form der Zähne sind weitere Varianten denkbar, wie z.B. ein eingearbeitetes Wellenprofil; auch muß die Profilform nicht.über den gesamten Verlauf der Kulisse konstant sein, sondern kann variieren.

Als besonders vorteilhaft ist eine Ausgestaltung des Aufstellelementes in einer Blechschalenbauweise bzw. in einer Hybridbauweise, also einer Kombination aus Blech und Kunststoff, zu sehen. Selbstverständlich ist auch ein Aufbau in Aluminium denkbar.

### Bezugszeichenliste

- 1: Aufstellelement
- 2: Gehäuse (Unterteil)
- 2 a: Anschlag
- 2 b: Druckabbau-Öffnungen
- 3: Hubelement
- 3 a: unterer Bund
- 4: zylindrische Wandung
- 4 a: Gasaustrittsöffnungen
- 4 b: kugelfangartige Ausnehmung
- 5: Druckkammer
- 6: Gasgenerator
- 7: abgewinkelte Zwischenstege
- 7 a: abgewinkelter Schenkel
- 8: Steuerkolben
- 8 a: umlaufende Nut
- 9: Rastkugeln
- 10: Kolbenrückstellfeder
- 11: Bundbuchse
- 11 a: Buchsenbund
- 12: Druckfeder
- 13: deformierbarer Anschlagpuffer
- 14: Stütz-Federn
- 15: Bolzen
- 16: Kulisse
- 16 a: Einlaufschräge
- 16 b: Zähne

## Patentansprüche

1. Vorrichtung zum Schutz von Personen bei einem Frontalaufprall auf ein Kraftfahrzeug durch aktives Aufstellen dessen Fronthaube im Haubenscharnierbereich, bestehend aus einem Aufstellelement (1) mit einem karosseriefesten Gehäuse (2) und einem darin linear geführten, mit dem Haubenscharnier verbundenen Hubelement (3), das im Grundzustand durch eine auslösbare Haltevorrichtung in seiner Lage fixiert und sensorgesteuert um einen mittels eines karosseriefesten Anschlages (2 a; 16) vorgegebenen Hub unter Aufstellung der Fronthaube ausfahrbar ist, **dadurch gekennzeichnet, dass** zum Auslösen der Haltevorrichtung und zum alleinigen Aufstellen des Hubelementes ein gemeinsamer pyrotechnischer Gasgenerator (6) vorgesehen ist, dass dem Anschlag (2 a; 16) Dämpfungsmittel (13; 15, 16) vorgeschaltet und so ausgebildet sind, dass das Hubelement (3) bei seiner Aufstellung seine durch den Anschlag begrenzte Endlage abgebremst weich erreicht, und dass zur Abstützung des Hubelementes (3) in seiner aufgestellten Position sowie zum Halten in dieser Position mindestens eine parallel geschaltete Stütz-Feder (14) vorgesehen ist, die so ausgelegt ist, dass sie erst in der aufgestellten Stellung des Hubelementes (3) mit diesen in Wirkkontakt tritt.

2. Vorrichtung nach Anspruch 1, **dadurch gekennzeichnet, dass** die Dämpfungsmittel jeweils durch einen deformierbaren Anschlagpuffer (13) aus stoßabsorbierendem Material gebildet sind.

3. Vorrichtung nach Anspruch 2, **dadurch gekennzeichnet, dass** im karosseriefesten Gehäuse (2) des Aufstellelementes (1) mindestens zwei symmetrisch gegenüberliegend angeordnete Anschläge (2 a) ausgebildet sind, das Aufstellelement (3) mindestens zwei symmetrisch gegenüberliegend angeordnete Bundabschnitte (3 a) für einen Wirkeingriff mit den Anschlägen (2 a) im Gehäuse (2) aufweist, und dass der Anschlagpuffer (13) jeweils unmittelbar unterhalb des zugeordneten Anschlages (2 a) im Gehäuse (2) angebracht ist.

4. Vorrichtung nach Anspruch 1, **dadurch gekennzeichnet, dass** die Dämpfungsmittel durch konstruktive Mittel zum Energieabbau mittels irreversibler Materialverformung gebildet sind.

5. Vorrichtung nach Anspruch 4, **dadurch gekennzeichnet, dass** entweder am Gehäuse (2) oder am Hubelement (3) des Aufstellelementes (1) ein Bolzen (15) mit einem vorgegebenen Durchmesser angebracht ist, der mit einer dann entweder am Hubelement (3) oder im Gehäuse (2) ausgebildeten Kulisse (16) zur Aufnahme des Bolzens (15), die partiell mindestens eine Engstelle (16 a, 16 b), deren lichte Weite kleiner als der Bolzendurchmesser ist, besitzt, in energieabbauenden Wirkeingriff bringbar ist.

6. Vorrichtung nach Anspruch 5, **dadurch gekennzeichnet, dass** die Engstelle durch eine Einlaufschräge (16 a) gebildet ist, die mit dem Bolzen (15), unmittelbar, bevor das Hubelement (3) seine aufgestellte Position erreicht, in Wirkeingriff tritt.

7. Vorrichtung nach Anspruch 5, **dadurch gekennzeichnet, dass** die Engstellen durch zahnartige Elemente (16 b) gebildet sind.

8. Vorrichtung nach einem der Ansprüche 5 bis 7, **dadurch gekennzeichnet, dass** die Kulisse (16) mit ihren Engstellen als gesondertes Konstruktionsteil ausgebildet ist, welches auswechselbar am Gehäuse (2) oder am Hubelement (3) angebracht ist.

9. Vorrichtung nach einem der Ansprüche 1 bis 8, **dadurch gekennzeichnet, dass** die auslösbare Haltevorrichtung zum Fixieren des Hubelementes (3) im Gehäuse (2) des Aufstellelementes (1) im Grundzustand durch ein Kugelschloß (9) in Verbindung mit einem Steuerkolben (8) gebildet ist.

10. Vorrichtung nach einem der Ansprüche 1 bis 9, **dadurch gekennzeichnet, dass** mittig im Gehäuse (2) des Aufstellelementes (1) eine vom Hubelement (3) umfasste Druckkammer (5) ausgebildet ist, an der bodenseitig der pyrotechnische Gasgenerator (6) auswechselbar angebracht ist, und die Gasaustritts-Öffnungen (4 a) aufweist.

11. Vorrichtung nach Anspruch 9 und 10, **dadurch gekennzeichnet, daß** in der Druckkammer (5) oberhalb der Gasaustritts-Öffnungen (4 a) der Steuerkolben (8), der eine umlaufende Ringnut (8 a) aufweist, angeordnet ist, dass die Wandung (4) der Druckkammer (5) zumindest zwei symmetrisch gegenüberliegende kugelfangartige Öffnungen (4 b) zur Aufnahme von Rastkugeln (9) besitzt, die im Grundzustand mit jeweils einer Schulter (7 a) im Hubelement (3) in haltender Wirkverbindung stehen, und dass unterhalb dieser Schultern (7 a) auf der Wandung (4) der Druckkammer (5) eine Bundbuchse (11) mit einem umlaufenden Bund (11 a), an dem sich eine Druckfeder (12) abstützt, gleitend geführt aufgenommen ist, die nach Aufstellung des Hubelementes (3) die Rastkugeln (9) in der Ringnut (8 a) des Steuerkolbens in ausgelöster Position halten.

12. Vorrichtung nach einem der Ansprüche 1 bis 11, **dadurch gekennzeichnet, dass** im Gehäuse (2) mindestens eine Druckabbau-Öffnung (2 b) ausgebildet ist.

13. Vorrichtung nach einem der Ansprüche 10 bis 12, **dadurch gekennzeichnet, dass** zu beiden Seiten der Druckkammer (5) jeweils eine Stützfeder (14) im Gehäuse (2) angebracht, die sich unter Vorspannung auf der einen Seite am Gehäuseboden und auf der anderen Seite am Kopfteil des Hubelementes (3) abstützt, und die jeweils so in ihrer Federkonstante ausgelegt ist, dass sie die aufgestellte Fronthaube in dieser Position halten kann, jedoch keinen Beitrag zur Aufstellbewegung leistet.

14. Vorrichtung nach einem der Ansprüche 10 bis 13, **dadurch gekennzeichnet, dass** die Wandung (4) der Druckkammer (5) zylindrisch ausgebildet ist.

## Claims

1. A device for the protection of persons in the event of a frontal impact on a motor vehicle by actively raising the bonnet thereof in the region of the bonnet hinge, comprising a raising component (1) with a housing (2) fixed to the bodywork and with a lifting member (3) which is guided in the housing (2) in a linear manner and is connected to the bonnet hinge and which is fixed in position in the normal state by a releasable holding device and, to raise the bonnet, is extendable in a sensor-controlled manner through a stroke which is predetermined by means of a stop (2a; 16) fixed to the bodywork, **characterised in that** a common pyrotechnic gas generator (6) is provided for releasing the holding device and for exclusively raising the lifting member, **in that** damping means (13; 15, 16) are arranged upstream of the stop (2a; 16) and are formed so that, when the lifting member (3) is raised, the latter softly reaches its end position, which is limited by the stop, in a decelerated manner, and **in that**, to support the lifting member (3) in its raised position and to hold it in this position, at least one supporting spring (14) is provided in a parallel arrangement and is designed so that it comes into operative contact with the lifting member (3) only in the raised position thereof.

2. A device according to claim 1, **characterised in that** the damping means are each formed by a deformable stop buffer (13) made of shock-absorbing material.

3. A device according to claim 2, **characterised in that** at least two symmetrically opposing stops (2a) are formed in the housing (2) of the raising component (1), said housing (2) being fixed to the bodywork, **in that** the lifting member (3) has at least two symmetrically opposing collar portions (3a) for operative engagement with the stops (2a) in the housing (2), and **in that** the stop buffer (13) is in each case arranged directly underneath the associated stop (2a) in the housing (2).

4. A device according to claim 1, **characterised in that** the damping means are formed by structural means for energy reduction by means of irreversible material deformation.

5. A device according to claim 4, **characterised in that** a bolt (15) with a predetermined diameter is mounted either on the housing (2) or on the lifting member (3) of the raising component (1) and can be brought into energy-reducing operative engagement with a guide (16), which is then formed either on the lifting member (3) or in the housing (2) in order to receive the bolt (15) and in part has at least one constriction (16a, 16b), the inner width of which is smaller than the bolt diameter.

6. A device according to claim 5, **characterised in that** the constriction is formed by a lead-in chamfer (16a) which comes into operative engagement with the bolt (15) immediately before the lifting member (3) reaches its raised position.

7. A device according to claim 5, **characterised in that** the constrictions are formed by tooth-like elements (16b).

8. A device according to any one of claims 5 to 7, **characterised in that** the guide (16) with its constrictions is formed as a separate structural part which is replaceably mounted on the housing (2) or on the lifting member (3).

9. A device according to any one of claims 1 to 8, **characterised in that** the releasable holding device for fixing the lifting member (3) in the housing (2) of the raising component (1) in the normal state is formed by a ball lock (9) in conjunction with a control piston (8).

10. A device according to any one of claims 1 to 9, **characterised in that** a pressure chamber (5) surrounded by the lifting member (3) is formed centrally in the housing (2) of the raising component (1), and the pyrotechnic gas generator (6) is replaceably mounted on the bottom of the pressure chamber (5), which has gas outlet openings (4a).

11. A device according to claim 9 and 10, **characterised in that** the control piston (8), which has a circumferential annular groove (8a), is arranged in the pressure chamber (5) above the gas outlet openings (4a), **in that** the wall (4) of the pressure chamber (5) has at least two symmetrically opposing, butt-type openings (4b) for receiving locking balls (9) which, in the normal state, are held in operative engagement with a respective shoulder (7a) in the lifting member (3), and **in that** a collared sleeve (11) with a circumferential collar (11a), on which a compression spring (12) is supported, is received and slidably guided underneath these shoulders (7a) on the wall (4) of the pressure chamber (5), the compression spring (12) holding the locking balls (9) in the annular groove (8a) of the control piston in a released position after the lifting member (3) has been raised.

12. A device according to any one of claims 1 to 11, **characterised in that** at least one pressure-reducing opening (2b) is formed in the housing (2).

13. A device according to any one of claims 10 to 12, **characterised in that,** on both sides of the pressure chamber (5), a respective supporting spring (14) is mounted in the housing (2) and is supported under prestress on the housing bottom at one end and on the head part of the lifting member (3) at the other end, and in each case its spring rate is designed so that it can hold the raised bonnet in this position, but makes no contribution to the lifting movement.

14. A device according to any one of claims 10 to 13, **characterised in that** the wall (4) of the pressure chamber (5) is cylindrically formed.

## Revendications

1. Dispositif pour la protection des personnes en cas d'impact frontal sur un véhicule automobile par un soulèvement actif du capot avant de celui-ci dans la zone de charnière de capot, composé d'un élément de soulèvement (1) avec un boîtier (2) fixé à la carrosserie et un élément de levage (3) guidé de façon linéaire dans le boîtier et relié à la charnière de capot, ledit élément de levage étant fixé dans sa position à l'état de base par un dispositif de maintien pouvant être déclenché et ledit élément de levage pouvant être sorti en étant commandé par capteur sur une course prédéfinie au moyen d'une butée (2a ; 16) fixée à la carrosserie, tout en soulevant le capot avant, **caractérisé en ce que** pour le déclenchement du dispositif de maintien et pour le seul soulèvement de l'élément de levage, un générateur de gaz pyrotechnique commun (6) est prévu, **en ce que** des moyens d'amortissement (13 ; 15, 16) sont placés en amont de la butée (2a ; 16) et sont réalisés de telle sorte que l'élément de levage (3) atteint, en étant freiné en douceur, au moment de son soulèvement, sa position finale délimitée par la butée, et **en ce que** pour le soutien de l'élément de levage (3) dans sa position soulevée ainsi que pour le maintien de cette position, au moins un ressort de soutien (14) connecté en parallèle est prévu qui est conçu de telle sorte que ce n'est que dans la position soulevée de l'élément de levage (3) qu'il entre en contact actif avec celui-ci.

2. Dispositif selon la revendication 1, **caractérisé en ce que** les moyens d'amortissement sont formés respectivement par un tampon de butée (13) déformable, d'un matériau absorbant les chocs.

3. Dispositif selon la revendication 2, **caractérisé en ce que** dans le boîtier (2) fixé à la carrosserie de l'élément de soulèvement (1), au moins deux butées (2a) sont disposées de façon symétriquement opposée, **en ce que** l'élément de soulèvement (3) présente au moins deux parties de collerette (3a) disposées de façon symétriquement opposée pour une mise en prise active avec les butées (2a) dans le boîtier (2), et **en ce que** le tampon de butée (13) est monté respectivement directement au-dessous de la butée associée (2a) dans le boîtier (2).

4. Dispositif selon la revendication 1, **caractérisé en ce que** les moyens d'amortissement sont formés par des moyens constructifs pour la dégradation d'énergie au moyen d'une déformation matérielle irréversible.

5. Dispositif selon la revendication 4, **caractérisé en ce que** soit sur le boîtier (2) soit sur l'élément de levage (3) de l'élément de soulèvement (1), un boulon (15) d'un diamètre prédéfini est monté qui peut être amené en prise active de dégradation d'énergie par une coulisse (16) réalisée soit sur l'élément de levage (3) soit dans le boîtier (2) pour recevoir le boulon (15), la coulisse possédant en partie au moins un étranglement (16a, 16b) dont la largeur libre est inférieure au diamètre de boulon.

6. Dispositif selon la revendication 5, **caractérisé en ce que** l'étranglement est formé par une rampe d'introduction (16a) qui entre en prise active avec le boulon (15) immédiatement avant que l'élément de levage (3) n'atteigne sa position soulevée.

7. Dispositif selon la revendication 5, **caractérisé en ce que** les étranglements sont formés par des éléments (16b) de type dent.

8. Dispositif selon l'une quelconque des revendications 5 à 7, **caractérisé en ce que** la coulisse (16) est réalisée avec ses étranglements comme une pièce de construction séparée qui est montée de façon échangeable sur le boîtier (2) ou sur l'élément de levage (3).

9. Dispositif selon l'une quelconque des revendications 1 à 8, **caractérisé en ce que** le dispositif de maintien pouvant être déclenché et destiné à fixer l'élément de levage (3) dans le boîtier (2) de l'élément de soulèvement (1) est formé à l'état de base par une serrure à bille (9) en relation avec un piston pilote (8).

10. Dispositif selon l'une quelconque des revendications 1 à 9, **caractérisé en ce que** de façon centrale dans le boîtier (2) de l'élément de soulèvement (1), une chambre de compression (5) entourée par l'élément de levage (3) est réalisée sur laquelle, du côté du fond, le générateur de gaz pyrotechnique (6) est monté de façon échangeable, et qui présente des ouvertures de sortie de gaz (4a).

11. Dispositif selon la revendication 9 ou 10, **caractérisé en ce que,** le piston pilote (8) qui présente une rainure annulaire périphérique (8a) est disposé dans la chambre de compression (5) au-dessus des ouvertures de sortie de gaz (4a) **en ce que** la paroi (4) de la chambre de compression (5) possède au moins deux ouvertures (4b) de type piège à bille, situées de façon symétriquement opposée, pour recevoir des billes d'arrêt (9) qui se trouvent à l'état de base dans une relation active de maintien avec respectivement un épaulement (7a) dans l'élément de levage (3), et **en ce qu'**au-dessous de ces épaulements (7a), sur la paroi (4) de la chambre de compression (5) une douille à collerette (11) avec une collerette périphérique (11a), sur laquelle un ressort de compression (12) prend appui, est logée en étant guidée en coulissement, qui maintient après le soulèvement de l'élément de levage (3) les billes d'arrêt (9) dans la rainure annulaire (8a) du piston pilote dans une position déclenchée.

12. Dispositif selon l'une quelconque des revendications 1 à 11, **caractérisé en ce que** dans le boîtier (2), au moins une ouverture de réduction de pression (2b) est réalisée.

13. Dispositif selon l'une quelconque des revendications 10 à 12, **caractérisé en ce qu'**à chacun des deux côtés de la chambre de compression (5), un ressort de soutien (14) est monté dans le boîtier (2) et qui prend appui sous précontrainte d'un côté sur le fond de boîtier, et de l'autre côté au niveau de la partie de tête de l'élément de levage (3), et dont sa constante de rappel de chacun est choisie de telle sorte qu'il peut maintenir le capot avant soulevé dans cette position, sans pour autant contribuer au mouvement de soulèvement.

14. Dispositif selon l'une quelconque des revendications 10 à 13, **caractérisé en ce que** la paroi (4) de la chambre de compression (5) est réalisée de façon cylindrique.
